# FASCICULE DE BREVET EUROPEEN

(11) **EP 2 666 255 B1**
(45) Date de publication et mention de la délivrance du brevet: **17.10.2018**
(21) Numéro de dépôt: 11817354.1
(22) Date de dépôt: 15.12.2011
(51) Int. Cl.: H04L 9/32

(54) **PROCÉDÉ D'AUTHENTIFICATION D'UN PREMIER ÉQUIPEMENT DE COMMUNICATION PAR UN SECOND ÉQUIPEMENT DE COMMUNICATION**
VERFAHREN ZUR AUTHENTIFIZIERUNG EINER ERSTEN KOMMUNIKATIONSVORRICHTUNG MIT EINER ZWEITEN KOMMUNIKATIONSVORRICHTUNG
METHOD FOR AUTHENTICATING FIRST COMMUNICATION EQUIPMENT BY MEANS OF SECOND COMMUNICATION EQUIPMENT

(30) Priorité: 19.01.2011 FR 1150415
(43) Date de publication de la demande: 27.11.2013
(73) Titulaire: Natural Security, 59000 Lille (FR)
(72) Inventeur: HOZANNE, Cédric, F-62840 Lorgies (FR); COUROUBLE, Benoît, F-59510 Hem (FR)
(74) Mandataire: Novagraaf Technologies
(86) Numéro de dépôt international: PCT/FR2011/053009
(87) Numéro de publication internationale: WO 2012/098306

(56) Documents cités:
- US-A1- 2010 138 652
- US-A1- 2010 153 722

## Description

L'invention concerne généralement le domaine des procédés d'authentification biométrique. L'invention concerne plus particulièrement un procédé d'authentification d'un premier équipement de communication par un second équipement de communication, le premier équipement comprenant au moins un support de mémorisation propre à stocker au moins :
- un énième certificat de chiffrement comprenant une première clé publique associée au premier équipement et une signature apposée par une autorité de certification ayant délivré le certificat de chiffrement, et
- une première clé privée associée asymétriquement à la première clé publique,
le énième certificat de chiffrement étant reconnu par le second équipement.

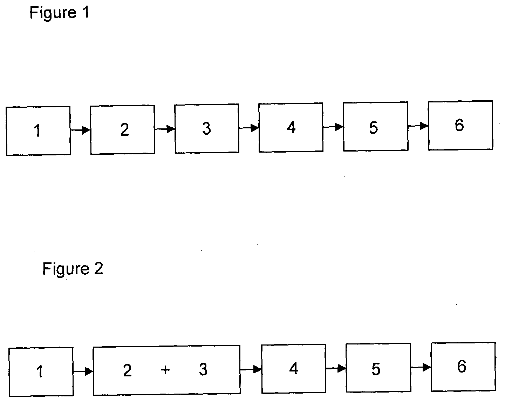

Les demandes internationales WO 2005/078647 et WO 2007/100709 décrivent des procédés d'authentification biométrique mettant en oeuvre au moins un premier équipement de communication et un second équipement de communication. Le premier équipement de communication comprend un moyen de mémorisation pour stocker des données contenant un gabarit biométrique, des applications et des moyens de communication avec et/ou sans contact pour la réception et la transmission de données. Le premier équipement de communication comprend également des moyens de traitement pour opérer notamment une comparaison entre le modèle biométrique qu'il stocke et un échantillon biométrique acquis par un capteur biométrique relié au second équipement de communication et reçu depuis des moyens de communication du second équipement de communication. Si l'échantillon biométrique correspond au modèle biométrique, le porteur du premier équipement de communication est authentifié par le second équipement de communication comme titulaire légitime de cet équipement. Le second équipement de communication est alors agencé pour compléter l'établissement d'une session transactionnelle avec le premier équipement de communication, puis sélectionner 5 une application du premier équipement de communication à appeler pour compléter la transaction 6 (Cf. figure 1). Le premier équipement de communication est agencé pour transmettre au second équipement de communication un résultat de l'application appelée par le second équipement de communication.

Ces procédés prévoient donc le transfert entre les deux équipements de communication des données biométriques propres à l'utilisateur. On comprend que ce transfert doive être réalisé de façon sécurisée avec des équipements ayant été reconnus intègres et authentiques.

De plus, le document de publication de demande de brevet US2010/0153722 expose une application de vérification de l'identité d'un utilisateur en temps réel, combinant la vérification d'un certificat biométrique d'un utlisateur avec un procédé d'authentification de type défi-réponse (challenge-response). Le document de publication de demande de brevet US2010/0138652 expose un système de gestion des listes de révocation de certificats.

Comme illustré sur la figure 1, postérieurement à une détection 1 avec ou sans contact du premier équipement de communication par le second équipement de communication et préalablement à l'authentification du porteur 4 du premier équipement de communication, ces procédés mettent en oeuvre deux étapes successives, distinctes et indépendantes :
- une étape d'authentification 2 du premier équipement de communication par le second équipement de communication, et
- une étape d'ouverture 3 d'un canal de communication sécurisé entre le premier équipement de communication et le second équipement de communication.

Ces deux étapes sont préférentiellement réalisées dans l'ordre susmentionné, de sorte qu'un canal de communication sécurisé ne soit ouvert qu'avec chaque premier équipement de communication authentifié, et il est à noter que l'étape d'ouverture d'un canal de communication sécurisé, quoique présentée comme optionnelle, est préférentiellement réalisée.

Dans ce contexte, et plus particulièrement dans le contexte du paiement en caisse de marchandises sur un point de vente, on comprend qu'il est avantageux de réduire le temps nécessaire à la réalisation de la transaction.

La présente invention, qui s'appuie sur cette observation originale, propose une solution applicative permettant de réaliser chaque transaction en un temps réduit.

A cette fin, le procédé d'authentification d'un premier équipement de communication par un second équipement de communication, et d'ouverture d'un canal de communication sécurisé entre lesdits premier et second équipements en vue d'échanges ultérieurs de données entre lesdits premier et second équipements à travers ledit canal de communication sécurisé, le premier équipement comprenant au moins un support de mémorisation propre à stocker au moins:
- un énième certificat de chiffrement comprenant une première clé publique associée au premier équipement et une signature apposée par une autorité de certification ayant délivré le certificat de chiffrement, et
- une première clé privée associée asymétriquement à la première clé publique, le énième certificat de chiffrement étant reconnu par le second équipement,
   où le procédé est essentiellement tel qu'il comprend :
   - une première étape de transmission depuis le premier équipement au second équipement dudit énième certificat de chiffrement,
   - une première étape de vérification par le second équipement de la signature dudit énième certificat de chiffrement,
   - une première étape de génération par le second équipement d'une première clé de chiffrement, cette dernière comprenant au moins une partie d'un challenge,
   - une première étape de chiffrement par le second équipement avec ladite première clé publique de la première clé de chiffrement,
   - une deuxième étape de transmission depuis le second équipement au premier équipement de la première clé de chiffrement chiffrée,
   - une première étape de déchiffrement par le premier équipement avec ladite première clé privée de ladite première clé de chiffrement chiffrée,
   - une deuxième étape de génération par le premier équipement d'une réponse au challenge,
   - une troisième étape de transmission depuis le premier équipement au second équipement au moins de la réponse au challenge, et
   - une deuxième étape de vérification par le second équipement de la réponse au challenge,
      où ladite première clé de chiffrement est utilisée pour chiffrer ou déchiffrer lesdits échanges ultérieurs entre le premier équipement et le second équipement à travers le canal de communication sécurisé.

Le procédé permet ainsi de combiner authentification du premier équipement par le second équipement et ouverture d'un canal de communication sécurisé entre le premier équipement et le second équipement en réduisant significativement le nombre d'échanges nécessaires, et donc le temps nécessaire, par rapport à un procédé dans lequel les étapes d'authentification du premier équipement par le second équipement et d'ouverture d'un canal de communication sécurisé entre le premier équipement et le second équipement sont réalisées de façon successives, distinctes et indépendantes. Il est à noter que la clé de chiffrement est transmise depuis le second équipement au premier équipement de façon sécurisée.

Selon une particularité, le procédé comprend en outre, préalablement à la première étape de transmission depuis le premier équipement au second équipement dudit énième certificat de chiffrement, une première étape de sélection par le second équipement parmi un ensemble de certificats stockés sur le support de mémorisation du premier équipement d'un sous-ensemble de certificats reconnus par le second équipement, ledit sous-ensemble comprenant au moins ledit énième certificat de chiffrement.

Selon une autre particularité, le procédé comprend en outre une deuxième étape de sélection par le second équipement du énième certificat de chiffrement, de sorte que, le certificat de chiffrement étant associé à une méthode de génération d'un canal de communication sécurisé, cette étape de sélection détermine la méthode de génération d'un canal de communication sécurisé à utiliser, chaque méthode de génération d'un canal de communication sécurisé étant associée à un identifiant unique.

Selon un premier mode de réalisation, la première clé de chiffrement est une clé maîtresse de type S-MASTER ou de type S-ENC qui est accompagnée ou non d'une clé de type S-MAC, selon la méthode de génération d'un canal de communication sécurisé utilisée, et en ce que le challenge compris dans la première clé de chiffrement consiste en un premier identifiant associé à la méthode de génération d'un canal de communication sécurisé utilisée.

Selon une particularité du premier mode de réalisation, le procédé comprend en outre, suite à la première étape de chiffrement par le second équipement avec la première clé publique de la première clé de chiffrement, une troisième étape de génération par le second équipement d'un premier cryptogramme selon un format déterminé, le premier cryptogramme comprenant au moins la première clé de chiffrement chiffrée, la deuxième étape de transmission depuis le second équipement au premier équipement de la première clé de chiffrement chiffrée consistant à transmettre le premier cryptogramme.

Selon une autre particularité du premier mode de réalisation, la deuxième étape de génération par le premier équipement d'une réponse au challenge consiste à générer un second identifiant associé au type de clé maîtresse déchiffrée, la réponse au challenge consistant en le second identifiant.

Selon une autre particularité du premier mode de réalisation, le procédé comprend en outre :
- une deuxième étape de chiffrement par le premier équipement avec la première clé de chiffrement de la réponse au challenge, avant sa transmission depuis le premier équipement au second équipement, et
- une deuxième étape de déchiffrement par le second équipement avec la première clé de chiffrement de la réponse chiffrée, avant sa vérification par le second équipement,
la troisième étape de transmission depuis le premier équipement au second équipement au moins de la réponse au challenge consistant à transmettre au moins la réponse chiffrée au challenge.

Le procédé permet ainsi, avant même la deuxième étape de vérification par le second équipement de la réponse au challenge, c'est-à-dire avant la fin du procédé selon l'invention, un échange sécurisé par chiffrement/déchiffrement des données transférées d'un équipement à l'autre, tel que le seront les échanges ultérieurs liés à la réalisation d'au moins une transaction.

Selon une autre particularité du premier mode de réalisation, la deuxième étape de vérification par le second équipement de la réponse au challenge consiste en une première étape de comparaison entre les premier et second identifiants.

Selon un deuxième mode de réalisation, la première étape de génération par le second équipement de la première clé de chiffrement comprend une première sous-étape de génération par le second équipement d'un premier nombre aléatoire et une seconde sous-étape de génération d'une seconde clé publique et d'une seconde clé privée asymétriques associées au second équipement, la première clé de chiffrement consistant en un premier ensemble formé par le premier nombre aléatoire et la seconde clé publique, la seconde clé publique constituant ladite au moins une partie du challenge et la seconde clé privée en constituant l'autre partie.

Selon une particularité du deuxième mode de réalisation, le procédé comprend en outre, suite à la première étape de chiffrement par le second équipement avec la première clé publique de la première clé de chiffrement, une troisième étape de génération par le second équipement d'un second cryptogramme selon un format déterminé, le second cryptogramme comprenant au moins la première clé de chiffrement chiffrée, la deuxième étape de transmission depuis le second équipement au premier équipement de la première clé de chiffrement chiffrée consistant à transmettre le second cryptogramme.

Selon une autre particularité du deuxième mode de réalisation, le procédé comprend en outre, après la première étape de déchiffrement par le premier équipement avec ladite première clé privée de ladite première clé de chiffrement chiffrée, une quatrième étape de génération par le premier équipement d'un second nombre aléatoire, une concaténation des premier et second nombres aléatoires définissant une seconde clé de chiffrement.

Le procédé permet ainsi avantageusement d'atteindre un plus haut niveau de sécurité en ce que la seconde clé de chiffrement, qui sera utilisée ultérieurement pour chiffrer/déchiffrer les échanges entre le premier équipement et le second équipement, est générée en partie par le premier équipement (selon le premier mode de réalisation, la première clé de chiffrement, qui sera celle utilisée ultérieurement pour chiffrer/déchiffrer les échanges entre le premier équipement et le second équipement, est générée uniquement par le second équipement).

Selon une autre particularité du deuxième mode de réalisation, la deuxième étape de génération par le premier équipement de la réponse au challenge consiste en une deuxième étape de chiffrement par le premier équipement avec la seconde clé publique de la seconde clé de chiffrement, la réponse au challenge consistant en la seconde clé de chiffrement chiffrée.

Selon une autre particularité du deuxième mode de réalisation, la deuxième étape de vérification par le second équipement de la réponse au challenge consiste en une troisième étape de déchiffrement par le second équipement avec sa seconde clé privée de la seconde clé de chiffrement chiffrée et en une seconde étape de comparaison entre le premier nombre aléatoire issu de la troisième étape de déchiffrement et le premier nombre aléatoire généré lors de la première étape de génération.

Selon une autre particularité des premier et deuxième modes de réalisation, la réponse au challenge comprend en outre un code formaté représentatif d'un accusé de réception par le premier équipement de la première clé de chiffrement chiffrée, suite à sa transmission depuis le second équipement, la troisième étape de transmission depuis le premier équipement au second équipement au moins de la réponse au challenge consistant à transmettre en outre ledit code formaté.

Selon une autre particularité des premier et deuxième modes de réalisation, la deuxième étape de vérification par le second équipement de la réponse au challenge consiste en outre à vérifier que le code formaté est représentatif de la bonne réception par le premier équipement de la première clé de chiffrement chiffrée.

Le procédé selon ces deux dernières particularités permet ainsi avantageusement une vérification supplémentaire indépendante de celle liée au challenge soumis au premier équipement par le second équipement.

D'autres caractéristiques et avantages de l'invention ressortiront clairement de la description qui en est faite ci-après, à titre indicatif et nullement limitatif, en référence aux dessins annexés, dans lesquels :
- la figure 1 représente schématiquement un procédé d'authentification biométrique selon l'art antérieur,
- la figure 2 représente schématiquement un procédé d'authentification biométrique tel que mis en oeuvre avec le procédé selon l'invention,
- la figure 3 représente schématiquement le procédé selon l'invention,
- la figure 4 représente schématiquement le procédé illustré sur la figure 2 selon un premier mode de réalisation,
- la figure 5 illustre un cryptogramme selon le premier mode de réalisation du procédé,
- la figure 6 représente schématiquement le procédé illustré sur la figure 2 selon un deuxième mode de réalisation,
- la figure 7 illustre un cryptogramme selon le deuxième mode de réalisation du procédé, et
- la figure 8 illustre le format de la réponse au challenge selon le deuxième mode de réalisation du procédé.

Le procédé d'authentification met en oeuvre un premier équipement 10 de communication et un second équipement 20 de communication. Si seule l'authentification du premier équipement par le second est considérée par la suite, il est évident qu'une authentification du second équipement par le premier peut être obtenue, au prix d'une simple inversion de leur rôle respectif dans le présent procédé.

Le second équipement est par exemple un terminal local. Lorsqu'il comprend entre autre des moyens de communication sans fil, il constitue plus particulièrement un dispositif d'acceptation sans fil (ou 'Wireless Acceptance Device' (WAD) selon la terminologie anglaise). Le second équipement de communication est utilisé par un utilisateur dit d'acceptation, tel qu'un marchand, pour réaliser des transactions de services, telles que la vente/l'achat de marchandises ou de services, le retrait d'argent, le paiement par Internet, les opérations de fidélisation, le contrôle d'accès physique, ...

Le second équipement comprend préférentiellement un ensemble de composants, dont :
- un dispositif de réseau personnel sans fil (ou 'Wireless Personal Area Network (WPAN) selon la terminologie anglaise), qui lui fournit la capacité de communiquer sans fil,
- un dispositif d'entrée de données de vérification (ou Vérification Data Entry Device (VED) selon la terminologie anglaise), qui lui permet d'acquérir des données de vérification individuelles (par exemple biométriques) de l'utilisateur, et
- des caractéristiques logicielles de fonctionnement compatibles avec les deux premiers composants.

Le second équipement de communication peut également comprendre une interface homme-machine (ou 'Human-Machine Interface' (HMI) selon la terminologie anglaise) pour indiquer à son utilisateur la progression des transactions.

Le dispositif de réseau personnel sans fil (WPAN) est un composant matériel fournissant au second équipement de communication une interface de réseau personnel sans fil utilisée pour interconnecter des dispositifs se trouvant dans une zone de couverture limitée autour du dispositif de réseau personnel. Le second équipement de communication utilise le protocole du dispositif de réseau personnel pour communiquer, par exemple échanger des données ou des commandes, avec potentiellement une pluralité de premiers équipements de communication présente dans la zone de couverture du dispositif de réseau personnel.

Le dispositif de réseau personnel sans fil est localisé, mais sa localisation n'est pas restreinte. Il peut être embarqué dans le second équipement de communication ou en être séparé et connecté en temps que périphérique, par exemple par une liaison de type USB, à un autre dispositif, par exemple une caisse enregistreuse d'un point de vente.

Le second équipement portable est agencé pour communiquer au moins avec un premier équipement de communication.

Le premier équipement de communication est par exemple un dispositif personnel sans fil (ou Wireless Personal Device (WPD) selon la terminologie anglaise). Il est porté et utilisé par un utilisateur.

Le second équipement de communication est notamment agencé grâce à son dispositif d'entrée de données de vérification pour capter et transmettre au premier équipement de communication des données individuelles, par exemple biométriques, afin que le premier équipement de communication compare ces données à un gabarit qu'il stocke pour authentifier ou non son utilisateur comme titulaire légitime. Cette étape est illustrée sur la figure 1 et la figure 2 par la référence numérique 4.

Cet exemple d'authentification biométrique de l'utilisateur du premier équipement portable illustre que les premier et second équipements sont agencés pour réaliser une transaction applicative entre eux au cours de ce qu'il convient d'appeler une session transactionnelle.

Une session transactionnelle comprend plus particulièrement :
- une étape d'initialisation de la session, qui consiste à initier la communication entre le second équipement et au moins un premier équipement,
- une étape d'interaction, au cours de laquelle différentes étapes à valeur ajoutée sont réalisées,
- une étape de clôturation de la session, qui clôture la communication entre le second équipement et un premier équipement.

Le modèle de session transactionnelle ci-dessus s'applique quelque soit le mode de communication, par exemple avec ou sans contact. L'utilisation d'un mode de communication particulier n'introduit des spécificités que lors de l'étape d'initialisation et l'étape de clôturation de la session.

Dans un mode de communication sans contact, l'étape d'initialisation se réfère au processus de détection (Cf. la référence 1 sur la figure 1 et la figure 2) par le second équipement de la pluralité de premiers équipements présents dans la zone de couverture du réseau personnel sans fil.

Pendant une session, l'interaction entre le second équipement de communication et un premier équipement de communication est réalisée par utilisation d'échanges de messages de commandes et de réponses initiés par le second équipement. Les commandes (ou Command - Automatic Data Processing Unit (C-ADPU) selon la terminologie anglaise) et les réponses (ou Response - Automatic Data Processing Unit (C-ADPU) selon la terminologie anglaise) sont basées par exemple sur la norme ISO4. Le transfert des commandes depuis le second équipement à un premier équipement et des réponses depuis un premier équipement au second équipement dépend du mode de communication.

L'étape d'interaction est réalisée indépendamment du mode de communication utilisé. Elle peut comprendre la sélection d'un fournisseur d'accès personnel (ou Personal Accès provider (PAP) selon la terminologie anglaise), qui fournit des services tel que l'authentification du premier équipement (Cf. la référence 2 sur la figure 1 et la figure 2), la création d'un canal de communication sécurisé (Cf. la référence 3 sur la figure 1 et la figure 2) et l'authentification biométrique de l'utilisateur (Cf. la référence 4 sur la figure 1 et la figure 2).

Il est important de noter qu'il est ainsi d'autant plus avantageux de réduire le temps que prend nécessairement l'étape d'interaction du fait que cette étape comprend des étapes d'échanges préalables à toute transaction de service qui sont réalisées pour chaque premier équipement de communication parmi la pluralité de premiers équipements détectés.

L'étape d'interaction consiste également en l'exécution d'une ou plusieurs transactions de service (Cf. les références 5 et 6 sur la figure 1 et la figure 2). Une transaction de service est l'exécution d'une application fournie par un fournisseur de service. Plusieurs transactions de service peuvent être exécutées pendant une même session transactionnelle, par exemple une transaction de paiement et une opération de fidélisation.

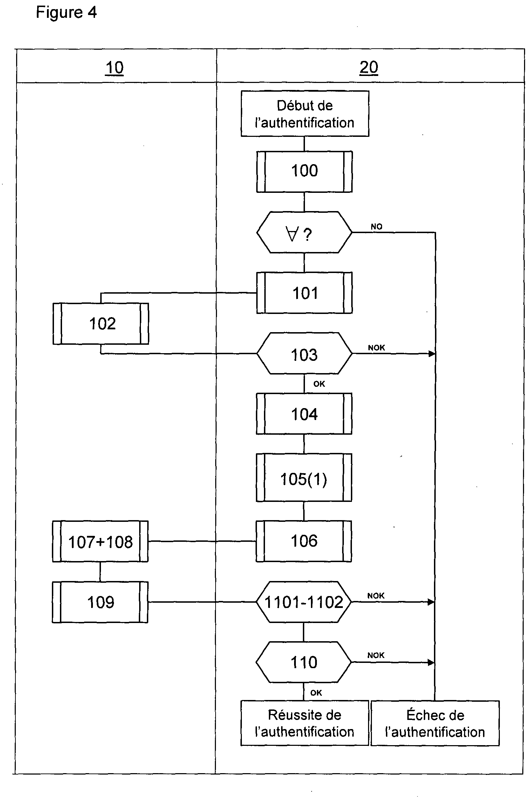

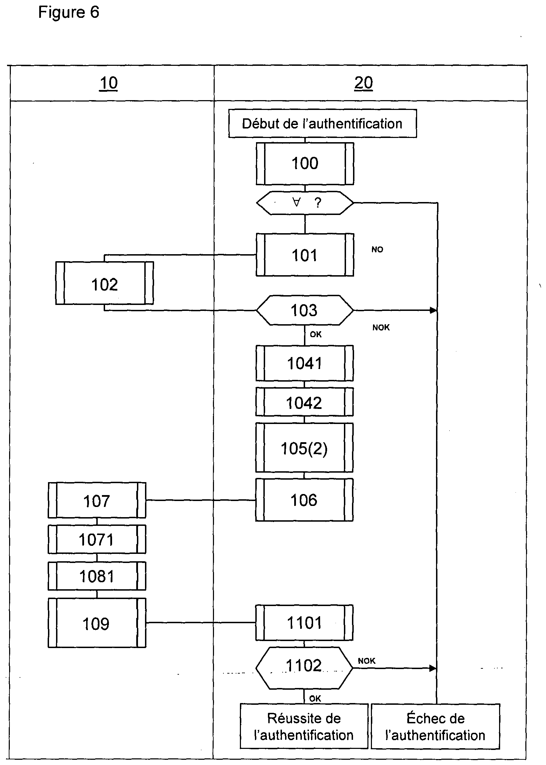

Notamment pour permettre l'authentification du premier équipement de communication par le second équipement de communication, au moins un ensemble de certificats est stocké sur un support de mémorisation du premier équipement, cet ensemble comprenant au moins un certificat d'authentification et/ou de chiffrement. Parmi cet ensemble de certificats, un sous-ensemble de certificats est nécessairement reconnu par le second équipement. Dans le cas contraire, l'authentification du premier équipement de communication par le second équipement de communication ne peut aboutir ; l'authentification échoue et le procédé d'authentification biométrique s'interrompt. Comme illustré sur la figure 4 et la figure 6, le second équipement sélectionne, lors d'une première étape de sélection 100, le sous-ensemble de certificats qu'il reconnaît parmi ledit ensemble. Il est nécessaire en vue d'authentifier le premier équipement que ce sous-ensemble comprenne ledit au moins un certificat d'authentification et/ou de chiffrement.

Dans le cas où plusieurs certificats de chiffrement sont reconnus par le second équipement, le procédé prévoit une deuxième étape de sélection 101, illustrée sur la figure 4 et la figure 6, par le second équipement d'un seul certificat de chiffrement, appelé le énième certificat de chiffrement.

Chaque certificat de chiffrement étant associé à une méthode de génération d'un canal de communication sécurisé, cette étape de sélection 101, ou équivalemment l'étape de sélection 100 dans le cas où elle aboutit à la sélection d'un seul certificat de chiffrement reconnu, détermine la méthode de génération d'un canal de communication sécurisé à utiliser. De plus, chaque méthode de génération d'un canal de communication sécurisé est associée à un identifiant unique, de sorte que le certificat de chiffrement sélectionné est indirectement associé à un identifiant unique.

Le énième certificat de chiffrement stocké sur le support de mémorisation du premier équipement comprend au moins une première clé publique associée au premier équipement et une signature apposée par une autorité de certification ayant délivré le certificat de chiffrement. Le support de mémorisation du premier équipement stocke également une première clé privée associée asymétriquement à la première clé publique. Il apparaît dès lors que le procédé repose essentiellement sur deux paramètres distincts : un algorithme de chiffrement asymétrique et un schéma de signature numérique.

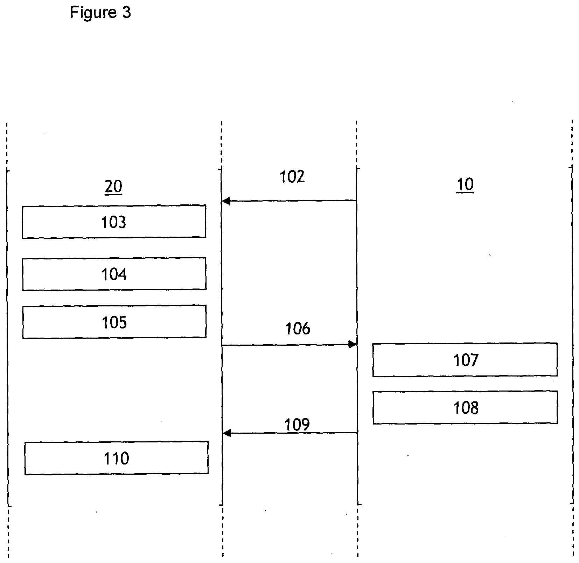

Comme illustré sur la figure 3, le procédé comprend :
- une première étape de transmission 102 depuis le premier équipement au second équipement dudit énième certificat de chiffrement,
- une première étape de vérification 103 par le second équipement de la signature dudit énième certificat de chiffrement,
- une première étape de génération 104 par le second équipement d'une première clé de chiffrement, cette dernière comprenant au moins une partie d'un challenge,
- une première étape de chiffrement 105 par le second équipement avec ladite première clé publique de la première clé de chiffrement,
- une deuxième étape de transmission 106 depuis le second équipement au premier équipement de la première clé de chiffrement chiffrée,
- une première étape de déchiffrement 107 par le premier équipement avec ladite première clé privée de ladite première clé de chiffrement chiffrée,
- une deuxième étape de génération 108 par le premier équipement d'une réponse au challenge,
- une troisième étape de transmission 109 depuis le premier équipement au second équipement au moins de la réponse au challenge, et
- une deuxième étape de vérification 110 par le second équipement de la réponse au challenge.

Le procédé permet ainsi de combiner authentification du premier équipement par le second équipement et ouverture d'un canal de communication sécurisé entre le premier équipement et le second équipement en réduisant significativement le nombre d'échanges nécessaires, et donc le temps nécessaire, par rapport à un procédé dans lequel les étapes d'authentification du premier équipement par le second équipement et d'ouverture d'un canal de communication sécurisé entre le premier équipement et le second équipement sont réalisées de façon successives, distinctes et indépendantes. Plus particulièrement, seules trois étapes dites de transmission sont nécessaires à l'obtention du résultat désiré atteint. Il est à noter, de plus, que la clé de chiffrement est transmise depuis le second équipement au premier équipement de façon sécurisée, car, étant chiffrée avec ladite clé publique du premier équipement, seul ce dernier peut la déchiffrer avec sa clé privée.

Par ailleurs, il est à noter que la première étape de vérification 103 par le second équipement de la signature dudit énième certificat de chiffrement, si elle ne renvoie pas un résultat positif, induit l'échec de l'authentification et l'interruption du procédé d'authentification biométrique.

Il doit être entendu que les premier et second équipements comprennent des moyens de traitement pour vérifier, chiffrer et/ou déchiffrer.

La première étape de vérification 103 par le second équipement de la signature dudit énième certificat de chiffrement est réalisée en utilisant un algorithme de vérification associé utilisé conjointement avec la clé publique de l'autorité de certification correspondante et le schéma de signature numérique correspondant.

Le procédé se décline plus particulièrement sous deux modes de réalisation qui mettent en oeuvre de façon différentes certaines des étapes du procédé présenté ci-dessus. Les deux modes de réalisation du procédé vont plus particulièrement être décrits ci-dessous.

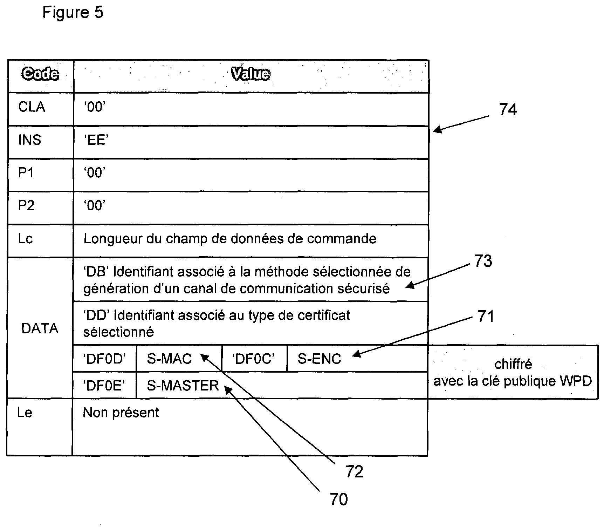

Le premier mode de réalisation du procédé est illustré sur la figure 4 et la figure 5.

Selon le premier mode de réalisation du procédé et comme plus particulièrement illustré sur la figure 5, la première clé de chiffrement est une clé maîtresse de type S-MASTER 70 ou de type S-ENC 71 selon la méthode de génération d'un canal de communication sécurisé utilisée. Cette clé maîtresse est accompagnée ou non d'une clé de type S-MAC 72 selon la méthode de génération d'un canal de communication sécurisé utilisée. Le challenge compris dans la première clé de chiffrement consiste en un premier identifiant 73 associé à la méthode de génération d'un canal de communication sécurisé utilisée.

Selon le premier mode de réalisation, le procédé comprend en outre, suite à la première étape de chiffrement 105 par le second équipement avec la première clé publique de la première clé de chiffrement, une troisième étape de génération 1051 par le second équipement d'un premier cryptogramme 74 selon un format déterminé. Comme illustré sur la figure 6, le premier cryptogramme comprend au moins la première clé de chiffrement chiffrée 70, 71 ou 72. La deuxième étape de transmission 106 depuis le second équipement au premier équipement de la première clé de chiffrement chiffrée consiste alors à transmettre le premier cryptogramme.

Selon le premier mode de réalisation, la deuxième étape de génération 108 par le premier équipement d'une réponse au challenge consiste à générer un second identifiant associé au type de clé maîtresse déchiffrée. La réponse au challenge consiste alors précisément en le second identifiant. Ainsi, lors de l'étape de sélection 100 ou 101, le second équipement a sélectionné un certificat associé à un identifiant, cet identifiant est compris dans la clé de chiffrement et est chiffré avec celle-ci. Puis, le premier équipement déchiffre avec sa clé privée la première clé de chiffrement et récupère notamment ledit identifiant. Cet identifiant s'il est déchiffré avec la première clé privée du premier équipement ayant transmis son certificat de chiffrement doit correspondre à l'identifiant associé à la méthode de génération d'un canal de communication sécurisé définie dans le certificat de chiffrement. Le challenge a ainsi été défini par le second équipement sur la base de données propres à la méthode de génération d'un canal de communication sécurisé, puis soumis au premier équipement qui d'une part est le seul à pouvoir en déchiffrer la réponse et d'autre part connaît *a priori* la réponse *ad hoc* au challenge. Il est à noter qu'indépendamment l'identifiant 73 (Cf. figure 6) de la méthode de génération d'un canal de communication sécurisé utilisée peut être écrite de façon non chiffrée dans le premier cryptogramme.

Selon le premier mode de réalisation, le procédé comprend en outre :
- une deuxième étape de chiffrement par le premier équipement avec la première clé de chiffrement de la réponse au challenge, avant sa transmission depuis le premier équipement au second équipement, et
- une deuxième étape de déchiffrement par le second équipement avec la première clé de chiffrement de la réponse chiffrée, avant sa vérification par le second équipement. La troisième étape de transmission 109 depuis le premier équipement au second équipement de la réponse au challenge consiste alors à transmettre au moins la réponse chiffrée au challenge.

Selon le premier mode de réalisation, le procédé prévoit donc avantageusement, avant même la deuxième étape de vérification par le second équipement de la réponse au challenge, un échange sécurisé par chiffrement/déchiffrement des données transférées d'un équipement à l'autre, tel que le seront les échanges ultérieurs liés à la réalisation d'au moins une transaction de service.

Selon le premier mode de réalisation, la deuxième étape de vérification 110 par le second équipement de la réponse au challenge consiste en une première étape de comparaison entre les premier et second identifiants. La deuxième étape de vérification 110, si elle ne renvoie pas un résultat positif, induit l'échec de l'authentification et l'interruption du procédé d'authentification biométrique ; au contraire, si elle renvoie un résultat positif, elle induit la réussite de l'authentification et la possibilité de poursuivre le procédé d'authentification biométrique, par exemple par une étape d'authentification biométrique de l'utilisateur du premier équipement.

Le deuxième mode de réalisation du procédé est illustré par la figure 6, la figure 7 et la figure 8.

Selon le deuxième mode de réalisation et comme illustré sur la figure 6, la première étape de génération 104 par le second équipement de la première clé de chiffrement comprend une première sous-étape de génération 1041 par le second équipement d'un premier nombre aléatoire 80 et une seconde sous-étape de génération 1042 d'une seconde clé publique 81 et d'une seconde clé privée asymétriques associées au second équipement. La première clé de chiffrement consiste en un premier ensemble formé par le premier nombre aléatoire et la seconde clé publique. La seconde clé publique constitue ladite au moins une partie du challenge et la seconde clé privée en constitue l'autre partie.

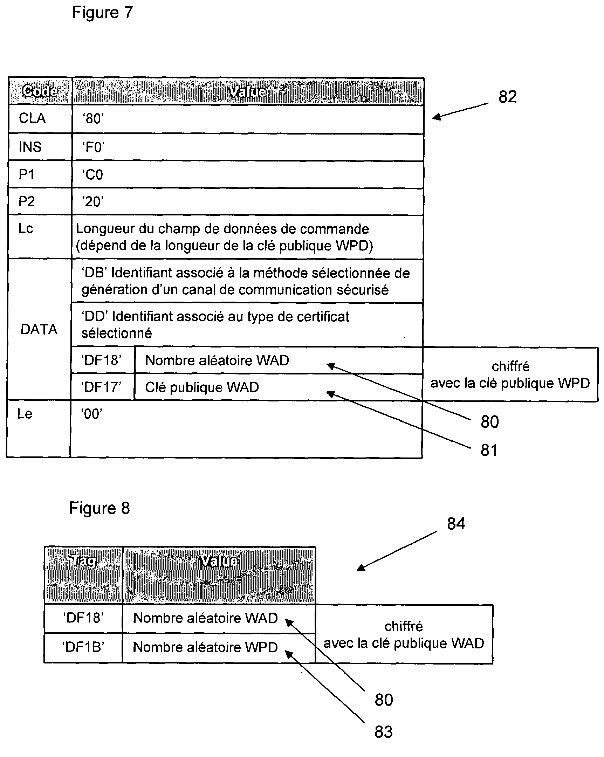

Selon le deuxième mode de réalisation, le procédé comprend en outre, suite à la première étape de chiffrement 105 par le second équipement avec la première clé publique de la première clé de chiffrement, une troisième étape de génération 1052 par le second équipement d'un second cryptogramme 82 selon un format déterminé. Comme illustré sur la figure 7, le second cryptogramme comprend au moins la première clé de chiffrement chiffrée. La deuxième étape de transmission 106 depuis le second équipement au premier équipement de la première clé de chiffrement chiffrée consiste alors à transmettre le second cryptogramme.

Selon le deuxième mode de réalisation et comme illustré sur la figure 6, le procédé comprend en outre, après la première étape de déchiffrement 107 par le premier équipement avec ladite première clé privée de ladite première clé de chiffrement chiffrée, une quatrième étape de génération 1071 par le premier équipement d'un second nombre aléatoire 83 (Cf. figure 8), une concaténation des premier et second nombres aléatoires définissant une seconde clé de chiffrement.

Selon son deuxième mode de réalisation, le procédé permet ainsi avantageusement d'atteindre un plus haut niveau de sécurité en ce que la seconde clé de chiffrement, qui sera celle utilisée ultérieurement pour chiffrer/déchiffrer les échanges entre le premier équipement et le second équipement, est générée en partie par le premier équipement. Au contraire, selon le premier mode de réalisation, la première clé de chiffrement, qui sera celle utilisée ultérieurement pour chiffrer/déchiffrer les échanges entre le premier équipement et le second équipement, est générée uniquement par le second équipement.

Selon le deuxième mode de réalisation, la deuxième étape de génération 108 par le premier équipement de la réponse au challenge consiste en une deuxième étape de chiffrement 1081 par le premier équipement avec la seconde clé publique de la seconde clé de chiffrement. Comme illustré sur la figure 8, la réponse au challenge 84 consiste alors en la seconde clé de chiffrement chiffrée.

Selon le deuxième mode de réalisation et comme illustré sur la figure 6, la deuxième étape de vérification 110 par le second équipement de la réponse au challenge consiste en une troisième étape de déchiffrement 1101 par le second équipement avec sa seconde clé privée de la seconde clé de chiffrement chiffrée et en une seconde étape de comparaison 1102 entre le premier nombre aléatoire issu de la troisième étape de déchiffrement et le premier nombre aléatoire généré lors de la première étape de génération 104.

Comme illustré sur la figure 5 et la figure 7, le premier cryptogramme 74 et le second cryptogramme 82 comprennent en outre plusieurs champs dont un champ pour renseigner une classe (CLA), un champ pour renseigner un premier paramètre (P1), un champ pour renseigner un second paramètre (P2), un champ pour renseigner une longueur du champ de données de commande (Lc), et un champ pour renseigner un identifiant de l'ensemble de certificats sélectionnés reconnus par le second équipement.

Selon le premier mode de réalisation et le second mode de réalisation, la réponse au challenge comprend en outre un code formaté représentatif d'un accusé de réception par le premier équipement de la première clé de chiffrement chiffrée, suite à sa transmission depuis le second équipement. La troisième étape de transmission 109 depuis le premier équipement au second équipement au moins de la réponse au challenge consiste alors à transmettre en outre ledit code formaté.

Conséquemment, la deuxième étape de vérification 110 par le second équipement de la réponse au challenge consiste en outre à vérifier que le code formaté est représentatif de la bonne réception par le premier équipement de la première clé de chiffrement chiffrée.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration mais peuvent être modifiés dans le domaine défini par la portée des revendications jointes.

## Revendications

1. Procédé d'authentification d'un premier équipement (10) de communication par un second équipement (20) de communication et d'ouverture d'un canal de communication sécurisé entre lesdits premier et second équipements en vue d'échanges ultérieurs de données entre lesdits premier et second équipements à travers ledit canal de communication sécurisé, le premier équipement comprenant au moins un support de mémorisation propre à stocker au moins:
- un énième certificat de chiffrement comprenant une première clé publique associée au premier équipement et une signature apposée par une autorité de certification ayant délivré le certificat de chiffrement, et
- une première clé privée associée asymétriquement à la première clé publique, le énième certificat de chiffrement étant reconnu par le second équipement, le procédé comprenant:
- une première étape de transmission (102) depuis le premier équipement au second équipement dudit énième certificat de chiffrement,
- une première étape de vérification (103) par le second équipement de la signature dudit énième certificat de chiffrement,
- une première étape de génération (104) par le second équipement d'une première clé de chiffrement, cette dernière comprenant au moins une partie d'un challenge,
- une première étape de chiffrement (105) par le second équipement avec ladite première clé publique de la première clé de chiffrement,
- une deuxième étape de transmission (106) depuis le second équipement au premier équipement de la première clé de chiffrement chiffrée,
- une première étape de déchiffrement (107) par le premier équipement avec ladite première clé privée de ladite première clé de chiffrement chiffrée,
- une deuxième étape de génération (108) par le premier équipement d'une réponse au challenge,
- une troisième étape de transmission (109) depuis le premier équipement au second équipement au moins de la réponse au challenge, et
- une deuxième étape de vérification (110) par le second équipement de la réponse au challenge,
et en ce que ladite première clé de chiffrement est utilisée pour chiffrer ou déchiffrer lesdits échanges ultérieurs entre le premier équipement et le second équipement à travers le canal de communication sécurisé.

2. Procédé d'authentification selon la revendication 1, **caractérisé en ce qu'**il comprend en outre, préalablement à la première étape de transmission (102) depuis le premier équipement au second équipement dudit énième certificat de chiffrement, une première étape de sélection (100) par le second équipement parmi un ensemble de certificats stockés sur le support de mémorisation du premier équipement d'un sous-ensemble de certificats reconnus par le second équipement, ledit sous-ensemble comprenant au moins ledit énième certificat de chiffrement.

3. Procédé d'authentification selon la revendication 2, **caractérisé en ce que**, le procédé comprend en outre une deuxième étape de sélection (101) par le second équipement du énième certificat de chiffrement, de sorte que, le certificat de chiffrement étant associé à une méthode de génération d'un canal de communication sécurisé, cette étape de sélection détermine la méthode de génération d'un canal de communication sécurisé à utiliser, chaque méthode de génération d'un canal de communication sécurisé étant associée à un identifiant unique.

4. Procédé d'authentification selon l'une quelconque des revendications 1 à 3, **caractérisé en ce que**, la première clé de chiffrement est une clé maîtresse de type S-MASTER (70) ou de type S-ENC (71) qui est accompagnée ou non d'une clé de type S-MAC (72), selon la méthode de génération d'un canal de communication sécurisé utilisée, et **en ce que** le challenge compris dans la première clé de chiffrement consiste en un premier identifiant (73) associé à la méthode de génération d'un canal de communication sécurisé utilisée.

5. Procédé d'authentification selon la revendication 4, **caractérisé en ce qu'**il comprend en outre, suite à la première étape de chiffrement (105) par le second équipement avec la première clé publique de la première clé de chiffrement, une troisième étape de génération (1051) par le second équipement d'un premier cryptogramme (74) selon un format déterminé, le premier cryptogramme comprenant au moins la première clé de chiffrement chiffrée, la deuxième étape de transmission (106) depuis le second équipement au premier équipement de la première clé de chiffrement chiffrée consistant à transmettre le premier cryptogramme.

6. Procédé d'authentification selon la revendication 4 ou la revendication 5, **caractérisé en ce que** la deuxième étape de génération (108) par le premier équipement d'une réponse au challenge consiste à générer un second identifiant associé au type de clé maîtresse déchiffrée, la réponse au challenge consistant en le second identifiant.

7. Procédé d'authentification selon la revendication 6, **caractérisé en ce qu'**il comprend en outre:
- une deuxième étape de chiffrement par le premier équipement avec la première clé de chiffrement de la réponse au challenge, avant sa transmission depuis le premier équipement au second équipement, et
- une deuxième étape de déchiffrement par le second équipement avec la première clé de chiffrement de la réponse chiffrée, avant sa vérification par le second équipement,
la troisième étape de transmission (109) depuis le premier équipement au second équipement au moins de la réponse au challenge consistant à transmettre au moins la réponse chiffrée au challenge.

8. Procédé d'authentification selon la revendication 6 ou la revendication 7, **caractérisé en ce que** la deuxième étape de vérification (110) par le second équipement de la réponse au challenge consiste en une première étape de comparaison entre les premier et second identifiants.

9. Procédé d'authentification selon l'une quelconque des revendications 1 à 3, **caractérisé en ce que** la première étape de génération (104) par le second équipement de la première clé de chiffrement comprend une première sous-étape de génération (1041) par le second équipement d'un premier nombre aléatoire (80) et une seconde sous-étape de génération (1042) d'une seconde clé publique (81) et d'une seconde clé privée asymétriques associées au second équipement, la première clé de chiffrement consistant en un premier ensemble formé par le premier nombre aléatoire et la seconde clé publique, la seconde clé publique constituant ladite au moins une partie du challenge et la seconde clé privée en constituant l'autre partie.

10. Procédé d'authentification selon la revendication 9, **caractérisé en ce qu'**il comprend en outre, suite à la première étape de chiffrement (105) par le second équipement avec la première clé publique de la première clé de chiffrement, une troisième étape de génération (1052) par le second équipement d'un second cryptogramme (82) selon un format déterminé, le second cryptogramme comprenant au moins la première clé de chiffrement chiffrée, la deuxième étape de transmission (106) depuis le second équipement au premier équipement de la première clé de chiffrement chiffrée consistant à transmettre le second cryptogramme.

11. Procédé d'authentification selon la revendication 9 ou la revendication 10, **caractérisé en ce qu'**il comprend en outre, après la première étape de déchiffrement (107) par le premier équipement avec ladite première clé privée de ladite première clé de chiffrement chiffrée, une quatrième étape de génération (1071) par le premier équipement d'un second nombre aléatoire (83), une concaténation des premier et second nombres aléatoires définissant une seconde clé de chiffrement et **en ce que** ladite seconde clé de chiffrement est utilisée, au lieu de ladite première clé de chiffrement, pour chiffrer ou déchiffrer lesdits échanges ultérieurs entre le premier équipement et le second équipement à travers le canal de communication sécurisé.

12. Procédé d'authentification selon la revendication 11, **caractérisé en ce que** la deuxième étape de génération (108) par le premier équipement de la réponse au challenge consiste en une deuxième étape de chiffrement (1081) par le premier équipement avec la seconde clé publique de la seconde clé de chiffrement, la réponse au challenge (84) consistant en la seconde clé de chiffrement chiffrée.

13. Procédé d'authentification selon la revendication 12, **caractérisé en ce que** la deuxième étape de vérification (110) par le second équipement de la réponse au challenge consiste en une troisième étape de déchiffrement (1101) par le second équipement avec sa seconde clé privée de la seconde clé de chiffrement chiffrée et en une seconde étape de comparaison (1102) entre le premier nombre aléatoire issu de la troisième étape de déchiffrement et le premier nombre aléatoire généré lors de la première étape de génération (104).

14. Procédé d'authentification selon la revendication 6 ou la revendication 12, **caractérisé en ce que** la réponse au challenge comprend en outre un code formaté représentatif d'un accusé de réception par le premier équipement de la première clé de chiffrement chiffrée, suite à sa transmission depuis le second équipement, la troisième étape de transmission (109) depuis le premier équipement au second équipement au moins de la réponse au challenge consistant à transmettre en outre ledit code formaté.

15. Procédé d'authentification selon l'une des revendications 8 et 13, et selon la revendication 14, **caractérisé en ce que** la deuxième étape de vérification (110) par le second équipement de la réponse au challenge consiste en outre à vérifier que le code formaté est représentatif de la bonne réception par le premier équipement de la première clé de chiffrement chiffrée.

## Patentansprüche

1. Verfahren zum Authentifizieren eines ersten Kommunikationsgerätes (10) durch ein zweites Kommunikationsgerät (20), und zum Öffnen eines gesicherten Kommunikationskanals zwischen dem ersten und zweiten Gerät in Hinblick auf spätere Datenaustausche zwischen dem ersten und zweiten Gerät über den gesicherten Kommunikationskanal, wobei das erste Gerät mindestens ein Speichermedium umfasst, das dazu geeignet ist, mindestens zu speichern:
- ein x-tes Verschlüsselungszertifikat, das einen dem ersten Gerät zugeordneten ersten öffentlichen Schlüssel und eine Signatur umfasst, die von einer Zertifizierungsstelle angebracht wurde, welche das Verschlüsselungszertifikat ausgestellt hat, und
- einen ersten privaten Schlüssel, der dem ersten öffentlichen Schlüssel asymmetrisch zugeordnet ist, wobei das x-te Verschlüsselungszertifikat vom zweiten Gerät anerkannt wird,
wobei das Verfahren umfasst:
- einen ersten Schritt des Übertragens (102) des x-ten Verschlüsselungszertifikats vom ersten Gerät an das zweite Gerät,
- einen ersten Schritt des Verifizierens (103) der Signatur des x-ten Verschlüsselungszertifikats durch das zweite Gerät,
- einen ersten Schritt des Erzeugens (104) eines ersten Verschlüsselungsschlüssels durch das zweite Gerät, wobei dieser letztere mindestens einen Teil einer Herausforderung umfasst,
- einen ersten Schritt des Verschlüsselns (105) des ersten Verschlüsselungsschlüssels durch das zweite Gerät mit dem ersten öffentlichen Schlüssel,
- einen zweiten Schritt des Übertragens (106) des ersten verschlüsselten Verschlüsselungsschlüssels vom zweiten Gerät an das erste Gerät,
- einen ersten Schritt des Entschlüsselns (107) des ersten verschlüsselten Verschlüsselungsschlüssels durch das erste Gerät mit dem ersten privaten Schlüssel,
- einen zweiten Schritt des Erzeugens (108) einer Antwort auf die Herausforderung durch das erste Gerät,
- einen dritten Schritt des Übertragens (109) von mindestens der Antwort auf die Herausforderung vom ersten Gerät an das zweite Gerät, und
- einen zweiten Schritt des Verifizierens (110) der Antwort auf die Herausforderung durch das zweite Gerät,
und der erste Verschlüsselungsschlüssel verwendet wird, um die späteren Austausche zwischen dem ersten Gerät und dem zweiten Gerät über den gesicherten Kommunikationskanal zu verschlüsseln oder zu entschlüsseln.

2. Authentifizierungsverfahren nach Anspruch 1, **dadurch gekennzeichnet, dass** es vor dem ersten Schritt des Übertragens (102) des x-ten Verschlüsselungszertifikats vom ersten Gerät an das zweite Gerät weiter einen ersten Schritt des Auswählens (100), durch das zweite Gerät aus einem Satz von Zertifikaten, die auf dem Speichermedium des ersten Gerätes gespeichert sind, eines Teilsatzes von Zertifikaten umfasst, die vom zweiten Gerät anerkannt werden, wobei der Teilsatz mindestens das x-te Verschlüsselungszertifikat umfasst.

3. Authentifizierungsverfahren nach Anspruch 2, **dadurch gekennzeichnet, dass** das Verfahren weiter einen zweiten Schritt des Auswählens (101), durch das zweite Gerät, des x-ten Verschlüsselungszertifikats derart umfasst, dass, da das Verschlüsselungszertifikat einem Verfahren zum Erzeugen eines gesicherten Kommunikationskanals zugeordnet ist, dieser Schritt des Auswählens das Verfahren zum Erzeugen eines gesicherten Kommunikationskanals bestimmt, welches verwendet werden soll, wobei jedes Verfahren zum Erzeugen eines gesicherten Kommunikationskanals einer eindeutigen Kennung zugeordnet ist.

4. Authentifizierungsverfahren nach einem der Ansprüche 1 bis 3, **dadurch gekennzeichnet, dass** der erste Verschlüsselungsschlüssel ein Master-Schlüssel vom Typ S-MASTER (70) oder vom Typ S-ENC (71) ist, der je nach dem verwendeten Verfahren zum Erzeugen eines gesicherten Kommunikationskanals von einem Schlüssel vom Typ S-MAC (72) begleitet wird oder nicht, und dadurch, dass die Herausforderung, die im ersten Verschlüsselungsschlüssel umfasst ist, in einer ersten Kennung (73) besteht, die dem verwendeten Verfahren zum Erzeugen eines gesicherten Kommunikationskanals zugeordnet ist.

5. Authentifizierungsverfahren nach Anspruch 4, **dadurch gekennzeichnet, dass** es nach dem ersten Schritt (105) des Verschlüsselns des ersten Verschlüsselungsschlüssels mit dem ersten öffentlichen Schlüssel durch das zweite Gerät weiter einen dritten Schritt des Erzeugens (1051), durch das zweite Gerät, eines ersten Kryptogramms (74) nach einem bestimmten Format umfasst, wobei das erste Kryptogramm mindestens den ersten verschlüsselten Verschlüsselungsschlüssel umfasst, wobei der zweite Schritt des Übertragens (106) des ersten verschlüsselten Verschlüsselungsschlüssels vom zweiten Gerät an das erste Gerät darin besteht, das erste Kryptogramm zu übertragen.

6. Authentifizierungsverfahren nach Anspruch 4 oder Anspruch 5, **dadurch gekennzeichnet, dass** der zweite Schritt des Erzeugens (108), durch das erste Gerät, einer Antwort auf die Herausforderung darin besteht, eine zweite Kennung zu erzeugen, die dem entschlüsselten Master-Schlüssel-Typ zugeordnet ist, wobei die Antwort auf die Herausforderung in der zweiten Kennung besteht.

7. Authentifizierungsverfahren nach Anspruch 6, **dadurch gekennzeichnet, dass** es weiter umfasst:
- einen zweiten Schritt des Verschlüsselns der Antwort auf die Herausforderung durch das erste Gerät mit dem ersten Verschlüsselungsschlüssel vor deren Übertragung vom ersten Gerät an das zweite Gerät, und
- einen zweiten Schritt des Entschlüsselns der verschlüsselten Antwort durch das zweite Gerät mit dem ersten Verschlüsselungsschlüssel vor deren Verifizierung durch das zweite Gerät,
wobei der dritte Schritt des Übertragens (109) von mindestens der Antwort auf die Herausforderung vom ersten Gerät an das zweite Gerät darin besteht, mindestens die verschlüsselte Antwort auf die Herausforderung zu übertragen.

8. Authentifizierungsverfahren nach Anspruch 6 oder Anspruch 7, **dadurch gekennzeichnet, dass** der zweite Schritt des Verifizierens (110) der Antwort auf die Herausforderung durch das zweite Gerät in einem ersten Schritt des Vergleichens zwischen der ersten und zweiten Kennung besteht.

9. Authentifizierungsverfahren nach einem der Ansprüche 1 bis 3, **dadurch gekennzeichnet, dass** der erste Schritt des Erzeugens (104) des ersten Verschlüsselungsschlüssels durch das zweite Gerät einen ersten Teilschritt des Erzeugens (1041) einer ersten Zufallszahl (80) durch das zweite Gerät, und einen zweiten Teilschritt des Erzeugens (1042) eines zweiten öffentlichen Schlüssels (81) und eines zweiten privaten Schlüssels, beide asymmetrisch, umfasst, die dem zweiten Gerät zugeordnet sind, wobei der erste Verschlüsselungsschlüssel in einem ersten Satz besteht, der von der ersten Zufallszahl und dem zweiten öffentlichen Schlüssel gebildet wird, wobei der zweite öffentliche Schlüssel den mindestens einen Teil der Herausforderung darstellt, und der zweite private Schlüssel den anderen Teil derselben darstellt.

10. Authentifizierungsverfahren nach Anspruch 9, **dadurch gekennzeichnet, dass** es nach dem ersten Schritt des Verschlüsselns (105) des ersten Verschlüsselungsschlüssels durch das zweite Gerät mit dem ersten öffentlichen Schlüssel weiter einen dritten Schritt des Erzeugens (1052), durch das zweite Gerät, eines zweiten Kryptogramms (82) nach einem bestimmten Format umfasst, wobei das zweite Kryptogramm mindestens den ersten verschlüsselten Verschlüsselungsschlüssel umfasst, wobei der zweite Schritt des Übertragens (106) des ersten verschlüsselten Verschlüsselungsschlüssels vom zweiten Gerät an das erste Gerät darin besteht, das zweite Kryptogramm zu übertragen.

11. Authentifizierungsverfahren nach Anspruch 9 oder Anspruch 10, **dadurch gekennzeichnet, dass** es weiter nach dem ersten Schritt des Entschlüsselns (107) des ersten verschlüsselten Verschlüsselungsschlüssels durch das erste Gerät mit dem ersten privaten Schlüssel einen vierten Schritt des Erzeugens (1071) einer zweiten Zufallsnummer (83) durch das erste Gerät umfasst, wobei eine Verkettung der ersten und zweiten Zufallszahl einen zweiten Verschlüsselungsschlüssel definiert, und dadurch, dass der zweite Verschlüsselungsschlüssel anstelle des ersten Verschlüsselungsschlüssels verwendet wird, um die späteren Austausche zwischen dem ersten Gerät und dem zweiten Gerät über den gesicherten Kommunikationskanal zu verschlüsseln oder zu entschlüsseln.

12. Authentifizierungsverfahren nach Anspruch 11, **dadurch gekennzeichnet, dass** der zweite Schritt des Erzeugens (108) der Antwort auf die Herausforderung durch das erste Gerät in einem zweiten Schritt des Verschlüsselns (1081) des zweiten Verschlüsselungsschlüssels durch das erste Gerät mit dem zweiten öffentlichen Schlüssel besteht, wobei die Antwort auf die Herausforderung (84) im zweiten verschlüsselten Verschlüsselungsschlüssel besteht.

13. Authentifizierungsverfahren nach Anspruch 12, **dadurch gekennzeichnet, dass** der zweite Schritt des Verifizierens (110) der Antwort auf die Herausforderung durch das zweite Gerät in einem dritten Schritt des Entschlüsselns (1101) des zweiten verschlüsselten Verschlüsselungsschlüssels durch das zweite Gerät mit seinem zweiten privaten Schlüssel, und in einem zweiten Schritt des Vergleichens (1102) zwischen der ersten Zufallszahl, die aus dem dritten Schritt des Entschlüsselns stammt, und der ersten Zufallszahl besteht, die beim ersten Schritt des Erzeugens (104) erzeugt wurde.

14. Authentifizierungsverfahren nach Anspruch 6 oder Anspruch 12, **dadurch gekennzeichnet, dass** die Antwort auf die Herausforderung weiter einen formatierten Code umfasst, der für eine Empfangsbestätigung des ersten verschlüsselten Verschlüsselungsschlüssels durch das erste Gerät nach seiner Übertragung vom zweiten Gerät repräsentativ ist, wobei der dritte Schritt des Übertragens (109) von mindestens der Antwort auf die Herausforderung vom ersten Gerät an das zweite Gerät darin besteht, weiter den formatierten Code zu übertragen.

15. Authentifizierungsverfahren nach einem der Ansprüche 8 und 13 und nach Anspruch 14, **dadurch gekennzeichnet, dass** der zweite Schritt des Verifizierens (110) der Antwort auf die Herausforderung durch das zweite Gerät weiter darin besteht, zu verifizieren, dass der formatierte Code für den richtigen Empfang des ersten verschlüsselten Verschlüsselungsschlüssels durch das erste Gerät repräsentativ ist.

## Claims

1. A method for authenticating a first communication apparatus (10) by a second communication apparatus (20) and for opening a secure communication channel between the first and second communication apparatus in view of subsequent data exchanges between said first and second communication apparatus through said secure communication channel, the first apparatus comprising at least one storage medium suitable for storing at least:
- an nth encryption certificate comprising a first public key associated with the first apparatus and a signature affixed by a certification authority that issued the encryption certificate, and
- a first private key associated asymmetrically with the first public key, the nth encryption certificate being recognized by the second apparatus,
the method comprising:
- a first step of transmission (102) from the first apparatus to the second apparatus of said nth encryption certificate,
- a first step of verification (103) by the second apparatus of the signature of said nth encryption certificate,
- a first step of generation (104) by the second apparatus of a first encryption key, the latter comprising at least one part of a challenge,
- a first step of encryption (105) by the second apparatus with said first public key of the first encryption key,
- a second step of transmission (106) from the second apparatus to the first apparatus of the first encrypted encryption key,
- a first step of decryption (107) by the first apparatus with said first private key of said first encrypted encryption key,
- a second step of generation (108) by the first apparatus of a response to the challenge,
- a third step of transmission (109) from the first apparatus to the second apparatus at least of the response to the challenge, and
- a second step of verification (110) by the second apparatus of the response to the challenge,
and wherein said first encryption key is used to encrypt or decrypt said subsequent exchanges between the first communication apparatus and the second communication apparatus through the secure communication channel.

2. The authentication method as claimed in claim 1, **characterized in that** it furthermore comprises, prior to the first step of transmission (102) from the first apparatus to the second apparatus of said nth encryption certificate, a first step of selection (100) by the second apparatus from among a set of certificates stored on the storage medium of the first apparatus of a subset of certificates recognized by the second apparatus, said subset comprising at least said nth encryption certificate.

3. The authentication method as claimed in claim 2, **characterized in that** the method furthermore comprises a second step of selection (101) by the second apparatus of the nth encryption certificate, so that, the encryption certificate being associated with a secure communication channel generating procedure, this selection step determines the secure communication channel generating procedure to be used, each secure communication channel generating procedure being associated with a unique identifier.

4. The authentication method as claimed in any one of claims 1 to 3, **characterized in that** the first encryption key is a master key of S-MASTER type (70) or of S-ENC type (71) which is accompanied or not by a key of S-MAC type (72), according to the secure communication channel generating procedure used, and **in that** the challenge included in the first encryption key consists of a first identifier (73) associated with the secure communication channel generating procedure used.

5. The authentication method as claimed in claim 4, **characterized in that** it furthermore comprises, subsequent to the first step of encryption (105) by the second apparatus with the first public key of the first encryption key, a third step of generation (1051) by the second apparatus of a first cryptogram (74) according to a determined format, the first cryptogram comprising at least the first encrypted encryption key, the second step of transmission (106) from the second apparatus to the first apparatus of the first encrypted encryption key consisting in transmitting the first cryptogram.

6. The authentication method as claimed in claim 4 or claim 5, **characterized in that** the second step of generation (108) by the first apparatus of a response to the challenge consists in generating a second identifier associated with the type of decrypted master key, the response to the challenge consisting of the second identifier.

7. The authentication method as claimed in claim 6, **characterized in that** it furthermore comprises:
- a second step of encryption by the first apparatus with the first encryption key of the response to the challenge, before its transmission from the first apparatus to the second apparatus, and
- a second step of decryption by the second apparatus with the first encryption key of the encrypted response, before its verification by the second apparatus,
the third step of transmission (109) from the first apparatus to the second apparatus at least of the response to the challenge consisting in transmitting at least the encrypted response to the challenge.

8. The authentication method as claimed in claim 6 or claim 7, **characterized in that** the second step of verification (110) by the second apparatus of the response to the challenge consists of a first step of comparison between the first and second identifiers.

9. The authentication method as claimed in any one of claims 1 to 3, **characterized in that** the first step of generation (104) by the second apparatus of the first encryption key comprises a first sub-step of generation (1041) by the second apparatus of a first random number (80) and a second sub-step of generation (1042) of a second public key (81) and of a second private key that are asymmetric and associated with the second apparatus, the first encryption key consisting of a first set formed by the first random number and the second public key, the second public key constituting said at least one part of the challenge and the second private key constituting the other part thereof.

10. The authentication method as claimed in claim 9, **characterized in that** it furthermore comprises, subsequent to the first step of encryption (105) by the second apparatus with the first public key of the first encryption key, a third step of generation (1052) by the second apparatus of a second cryptogram (82) according to a determined format, the second cryptogram comprising at least the first encrypted encryption key, the second step of transmission (106) from the second apparatus to the first apparatus of the first encrypted encryption key consisting in transmitting the second cryptogram.

11. The authentication method as claimed in claim 9 or claim 10, **characterized in that** it furthermore comprises, after the first step of decryption (107) by the first apparatus with said first private key of said first encrypted encryption key, a fourth step of generation (1071) by the first apparatus of a second random number (83), a concatenation of the first and second random numbers defining a second encryption key, and **in that** the second encryption key is used, instead of the first encryption key, to encrypt or decrypt said subsequent exchanges between the first apparatus and the second apparatus through the secure communication channel.

12. The authentication method as claimed in claim 11, **characterized in that** the second step of generation (108) by the first apparatus of the response to the challenge consists of a second step of encryption (1081) by the first apparatus with the second public key of the second encryption key, the response to the challenge (84) consisting of the second encrypted encryption key.

13. The authentication method as claimed in claim 12, **characterized in that** the second step of verification (110) by the second apparatus of the response to the challenge consists of a third step of decryption (1101) by the second apparatus with its second private key of the second encrypted encryption key and of a second step of comparison (1102) between the first random number issued from the third decryption step and the first random number generated during the first generation step (104) .

14. The authentication method as claimed in claim 6 or claim 12, **characterized in that** the response to the challenge furthermore comprises a formatted code representative of an acknowledgment of receipt by the first apparatus of the first encrypted encryption key, subsequent to its transmission from the second apparatus, the third step of transmission (109) from the first apparatus to the second apparatus at least of the response to the challenge consisting in furthermore transmitting said formatted code.

15. The authentication method as claimed in one of claims 8 and 13, and as claimed in claim 14, **characterized in that** the second step of verification (110) by the second apparatus of the response to the challenge furthermore consists in verifying that the formatted code is representative of the proper reception by the first apparatus of the first encrypted encryption key.
